# EUROPEAN PATENT APPLICATION

(11) **EP 4 668 739 A1**
(43) Date of publication of application: **24.12.2025**
(21) Application number: 24305950.8
(22) Date of filing: 17.06.2024
(51) Int. Cl.: H04N 19/119, H04N 19/176, H04N 19/51, H04N 19/593, H04N 19/70

(54) **ENCODING AND DECODING METHODS USING GEOMETRIC PARTITION MODES AND CORRESPONDING APPARATUSES**

(71) Applicant: InterDigital CE Patent Holdings, SAS, 75017 Paris (FR)
(72) Inventor: REUZE, Kevin, 35700 RENNES (FR); BORDES, Philippe, 35890 LAILLE (FR); CHEN, Ya, 35700 RENNES (FR); LE PENDU, Mikael, 35700 RENNES (FR)
(74) Representative: Interdigital

(57) **Abstract**

A decoding method is disclosed. It is determined that a current block is coded with one geometric partitioning mode of a set of geometric partitioning modes. A partition index is obtained for the current block in a set of partition indices. Each partition index of the set is associated with an angle index and a distance index, the angle index and the distance index defining a partition of the current block in at least two partitions. The current block is then decoded based on the angle index and the distance index associated with the partition index. The set of partition indices is identical for all geometric partitioning modes of the set of geometric partitioning modes.

## Description

### TECHNICAL FIELD

At least one of the present embodiments generally relates to a method and an apparatus for encoding and decoding a picture block using geometric partition mode.

### BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

### SUMMARY

In one implementation, a decoding method is disclosed. It may be determined that a current block is coded with one geometric partitioning mode of a set of geometric partitioning modes. A partition index may be obtained for the current block in a set of partition indices, each partition index of the set being associated with an angle index and a distance index, the angle index and the distance index defining a partition of the current block in at least two partitions. The current block may be decoded based on the angle index and the distance index associated with the partition index. The set of partition indices is identical for all geometric partitioning modes of the set of geometric partitioning modes.

### BRIEF DESCRIPTION OF THE DRAWINGS

FIG. 1 illustrates a block diagram of a system within which aspects of the present embodiments may be implemented;
FIG. 2 illustrates a block diagram of an embodiment of a video encoder within which aspects of the present embodiments may be implemented;
FIG. 3 illustrates a block diagram of an embodiment of a video decoder within which aspects of the present embodiments may be implemented;
FIG. 4A illustrates various geometric partitioning mode (GPM) splits grouped by identical edges;
FIG. 4B depicts a block partitioned by a GPM partitioning boundary defined by an angle and a distance;
FIG. 5 depicts various angles of split lines used by GPM;
FIG. 6 illustrates spatial GPM candidates;
FIG. 7 depicts GPM template; and
FIG. 8 depicts a flowchart of a method for decoding a block according to a specific embodiment.

### DETAILED DESCRIPTION

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

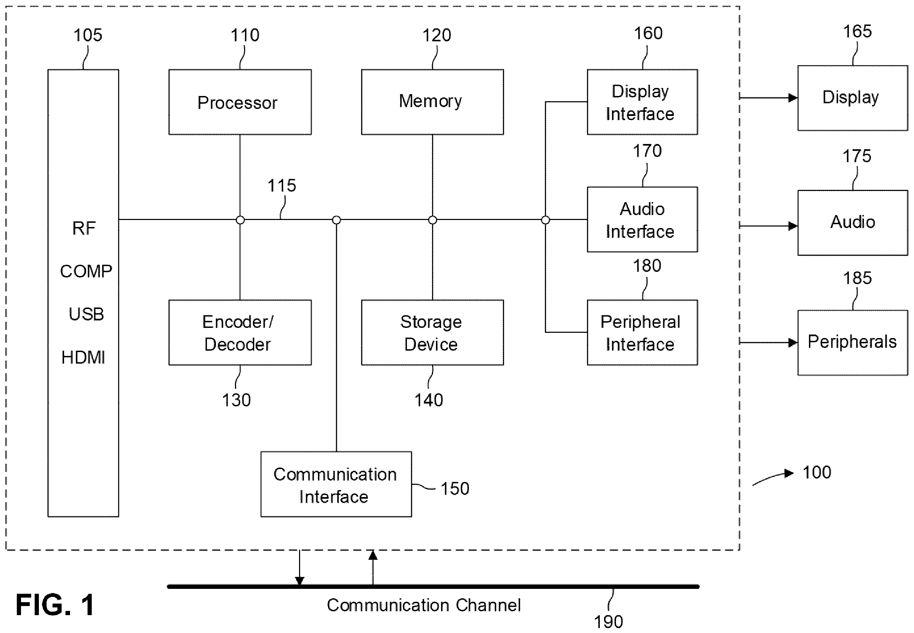

The aspects described and contemplated in this application can be implemented in many different forms. FIGs. 1, 2 and 3 below provide some embodiments, but other embodiments are contemplated and the discussion of FIGs. 1, 2 and 3 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium (e.g. a non-transitory computer readable storage medium) having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "encoded" or "coded" may be used interchangeably, the terms "pixel" and "sample" may be used interchangeably and the terms "image," "picture" and "frame" may be used interchangeably. Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

For the sake of clarity, satisfying, failing to satisfy a condition and configuring condition parameter(s) are described throughout embodiments described herein as relative to a threshold (e.g., greater, or lower than), a (e.g., threshold) value, configuring the (e.g., threshold) value, etc.). For example, satisfying a condition may be described as being above a (e.g., threshold) value, and failing to satisfy a condition (e.g., performance criteria) may be described as being below a (e.g., threshold) value. Embodiments described herein are not limited to threshold-based conditions. Any kind of other condition and parameter(s) (such as e.g., belonging or not belonging to a range of values) may be applicable to embodiments described herein.

The present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

**FIG. 1** illustrates a block diagram of an example of a system in which various aspects and embodiments can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing and encoder/decoder elements of system 100 are distributed across multiple ICs and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application. Processor 110 may include embedded memory, input output interface, and various other circuitries as known in the art. The system 100 includes at least one memory 120 (e.g., a volatile memory device, and/or a non-volatile memory device). System 100 includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100 or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In some embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 100 may be provided through various input devices as indicated in block 105. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/decoder 130 operating in combination with the memory and storage elements to process the datastream as necessary for presentation on an output device.

Various elements of system 100 may be provided within an integrated housing, Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802.11 (IEEE refers to the Institute of Electrical and Electronics Engineers). The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105. As indicated above, various embodiments provide data in a non-streaming manner. Additionally, various embodiments use wireless networks other than Wi-Fi, for example a cellular network or a Bluetooth network.

The system 100 may provide an output signal to various output devices, including a display 165, speakers 175, and other peripheral devices 185. The display 165 of various embodiments includes one or more of, for example, a touchscreen display, an organic light-emitting diode (OLED) display, a curved display, and/or a foldable display. The display 165 can be for a television, a tablet, a laptop, a cell phone (mobile phone), or other device. The display 165 can also be integrated with other components (for example, as in a smart phone), or separate (for example, an external monitor for a laptop). The other peripheral devices 185 include, in various examples of embodiments, one or more of a stand-alone digital video disc (or digital versatile disc) (DVR, for both terms), a disk player, a stereo system, and/or a lighting system. Various embodiments use one or more peripheral devices 185 that provide a function based on the output of the system 100. For example, a disk player performs the function of playing the output of the system 100.

In various embodiments, control signals are communicated between the system 100 and the display 165, speakers 175, or other peripheral devices 185 using signaling such as AV. Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

The embodiments can be carried out by computer software implemented by the processor 110 or by hardware, or by a combination of hardware and software. As a non-limiting example, the embodiments can be implemented by one or more integrated circuits. The memory 120 can be of any type appropriate to the technical environment and can be implemented using any appropriate data storage technology, such as optical memory devices, magnetic memory devices, semiconductor-based memory devices, fixed memory, and removable memory, as non-limiting examples. The processor 110 can be of any type appropriate to the technical environment, and can encompass one or more of microprocessors, general purpose computers, special purpose computers, and processors based on a multi-core architecture, as non-limiting examples.

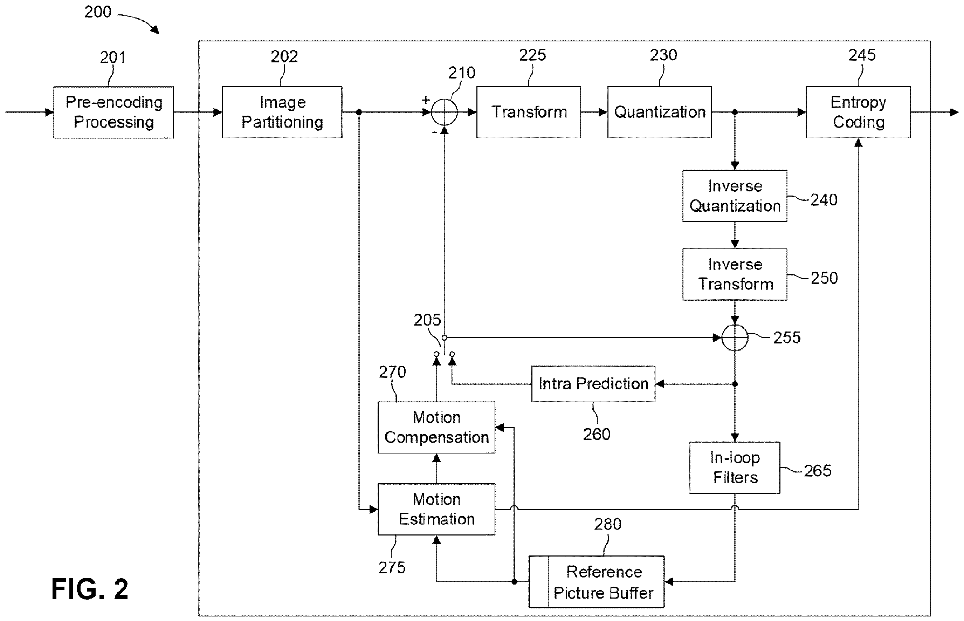

**FIG. 2** illustrates an example video encoder 200 within which aspects of the present embodiments may be implemented. Variations of example encoder 200 are contemplated, but the encoder 200 is described below for purposes of clarity without describing all expected variations. In some examples, FIG. 2 also illustrate an encoder in which improvements are made to HEVC standard or VVC standard or an encoder employing technologies similar to HEVC or VVC, such as an encoder ECM (Enhanced Compression Model) under development by JVET (Joint Video Exploration Team).

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing and attached to the bitstream.

In the encoder 200, a picture is encoded by the encoder elements as described below. The picture to be encoded is partitioned (202) and processed in units of, for example, CTU (Coding Tree Units), CUs (Coding Units). Each unit is encoded using, for example, either an intra or inter mode. When a unit is encoded in an intra mode, it performs intra prediction (260), e.g. using an intra-prediction tool such as Decoder Side Intra Mode Derivation (DIMD). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block (a.k.a. prediction block) from the original image block.

The prediction residuals are then transformed (225) into transform coefficients c (a.k.a prediction residual transform coefficients) which are quantized (230) into quantization indexes *c_{q}* (a.k.a transform coefficient levels or quantized transform coefficients on the encoder side). The quantization levels (a.k.a quantization indexes) *c_{q}*, as well as motion vectors and other syntax elements such as the picture partitioning information, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) (a.k.a. scaled) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset)/BIF (Bilateral Filtering)/ALF (Adaptive Loop Filter) filtering to reduce encoding artifacts. The filtered image is stored in a reference picture buffer (280). In-loop filters (265) are thus used to enhance reconstructed images before storing them in the reference picture buffer (280). In-loop filters form a whole family. Among them, deblocking filters (DBF) aim at reducing blocking artifacts occurring along block boundaries. Deblocking filters are usually designed to improve subjective quality, that is, the noticeability of such coding errors by the human psychovisual system. In usual video coding standards such as HEVC and VVC, deblocking filters are predetermined based on coding information (such as prediction modes, motion vectors, transform coefficients) and on local variations across block boundaries. On the other hand, adaptive loop filters (ALF) are learnt at encoder side in order to minimize a mean squared error with respect to source images, then the learned filter weights are encoded into the bitstream. Adaptive loop filters are usually applied at CTU-level, while deblocking filters are applied along block borders. The quantization of the residual coefficients may produce ringing artifacts around edges, both in still images and in moving objects in videos. Applying a bilateral filter (BIF) may significantly reduce ringing artifacts. BIF may be applied on decoded sample values directly after the inverse transform or on reconstructed samples after the deblocking filter.

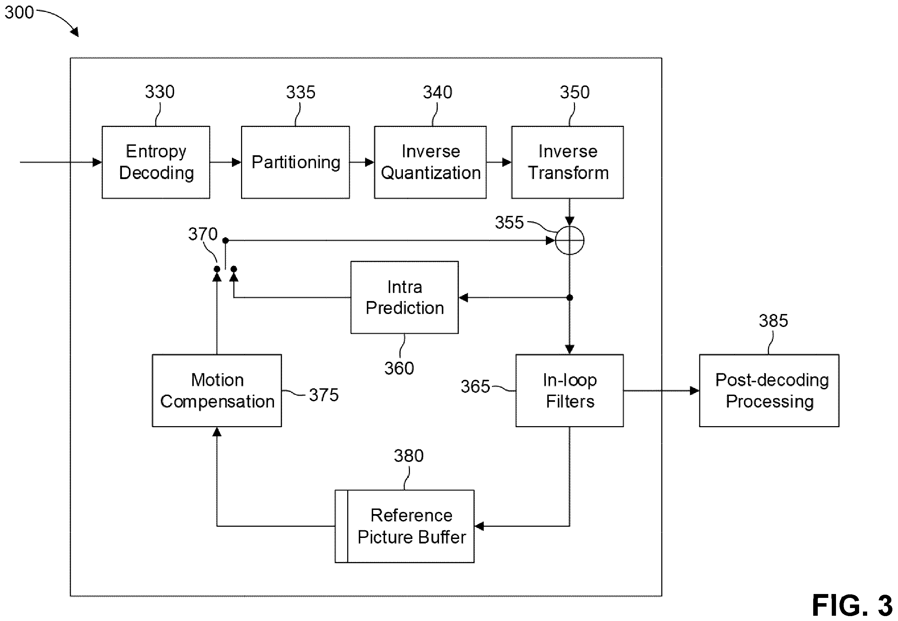

**FIG. 3** illustrates a block diagram of an example video decoder 300 within which aspects of the present embodiments may be implemented. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data. Variations of example decoder 300 are contemplated, but the decoder 300 is described below for purposes of clarity without describing all expected variations.

In particular, the input of the decoder includes a video bitstream, which can be generated by video encoder 200. The bitstream is first entropy decoded (330) to obtain quantization levels *c_{q}* (a.k.a. transform coefficient levels or quantization levels on the decoder side), prediction modes, motion vectors, and other coded information. The picture partition information indicates how the picture is partitioned. The decoder may therefore divide (335) the picture according to the decoded picture partitioning information. The quantization levels *c_{q}* are de-quantized (340) into reconstructed transform coefficients *cᵣ.* De-quantization is also named scaling. The reconstructed transform coefficients *cᵣ* are inverse transformed (350) to obtain the prediction residuals. Combining (355) the prediction residuals and the predicted block (a.k.a. prediction block), an image block is reconstructed. The predicted block can be obtained (370) from intra prediction (360) or motion-compensated prediction (i.e., inter prediction) (375). In-loop filters (365), e.g., the same in-loop filters as applied on the encoder side (265), are applied to the reconstructed image. The filtered image is stored at a reference picture buffer (380). Note that, for a given picture, the contents of the reference picture buffer 380 on the decoder 300 side is identical to the contents of the reference picture buffer 280 on the encoder 200 side for the same picture.

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

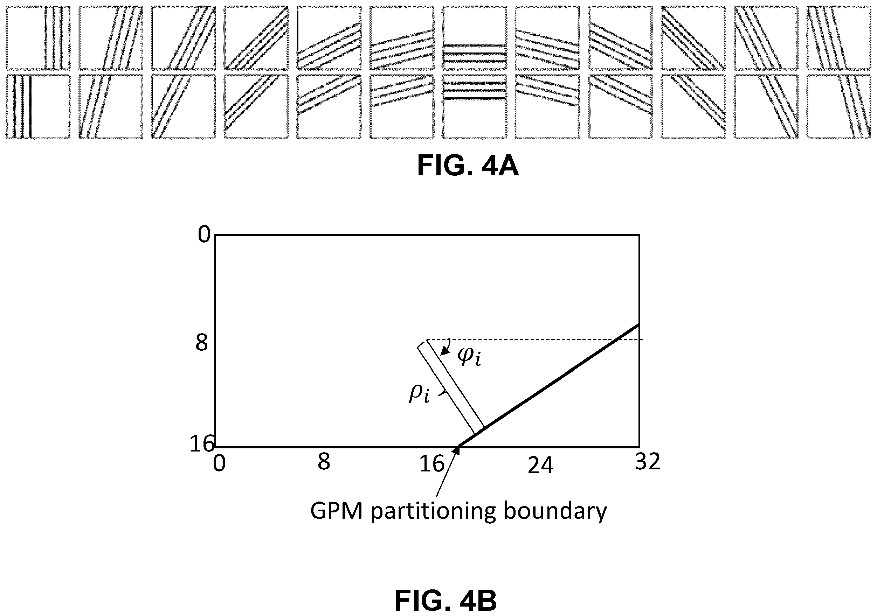

In VVC and ECM, a geometric partitioning mode (GPM) has been proposed with 64 partitions in total for inter prediction. A geometric partitioning mode may also be called a geometry partitioning mode. When the GPM is used, a CU is split into two partitions by a geometrically located straight line. Examples of such partitions are shown in **FIG.** 4A. The location of the splitting line (also known as GPM partitioning boundary) is mathematically derived from an angle *φᵢ* and a distance offset *ρᵢ* of a specific partition as depicted on **FIG. 4B****.** In VVC, each partition in the CU is inter-predicted using its own motion parameters and only uni-prediction is allowed for each partition, that is, each partition has one motion vector (MV) and one reference index. In ECM, bi-prediction is allowed. In ECM, one partition may be intra predicted, the other being inter predicted. This is known as intra-inter GPM. In GPM with inter and intra prediction, the final prediction samples are generated by weighting inter predicted samples and intra predicted samples for each GPM-separated region. The inter predicted samples are derived by inter GPM whereas the intra predicted samples are derived by an intra prediction mode (IPM) candidate list and an index signaled from the encoder. In an example, three available IPM candidates are used, namely the parallel angular mode against the GPM block boundary (Parallel mode), the perpendicular angular mode against the GPM block boundary (Perpendicular mode), and the Planar mode. After predicting each of the partitions, the sample values along the splitting edge may be adjusted using a blending process with adaptive weights. The partition is signaled with a GPM-partition-index in the bitstream.

IN ECM, 64 GPM partitions are defined by Table 1 that maps partition indices with angle index and distance index. The angle index provides information on the orientation of the line and distance index provides information on the position of the line within the block.

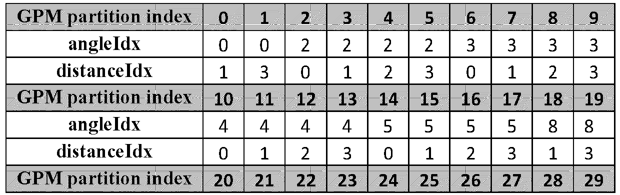

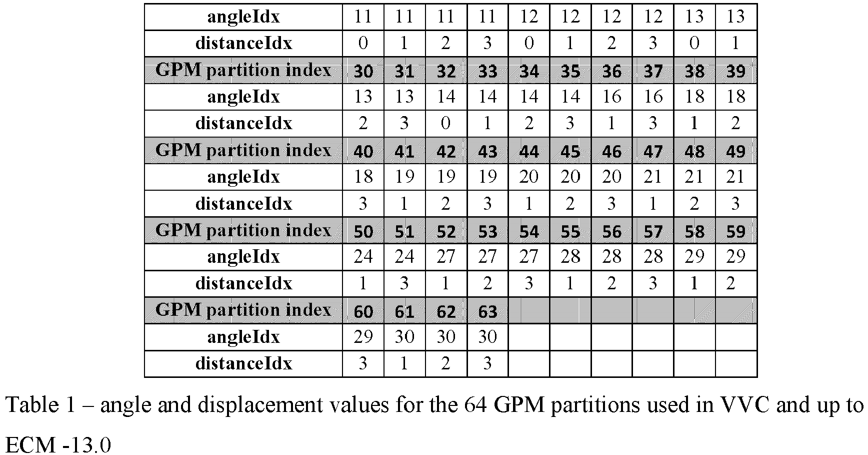

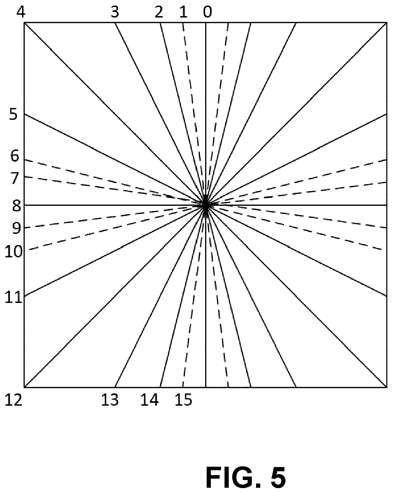

The angles in GPM have slopes that are powers of 2 to simplify hardware implementations. The angles correspond to the splits shown in FIG. 5. The dotted lines refer to split orientation that are not allowed. The angles available in GPM all have a slope (ratio x vs y) that is a power of 2 or ½ as shown in Table 2.

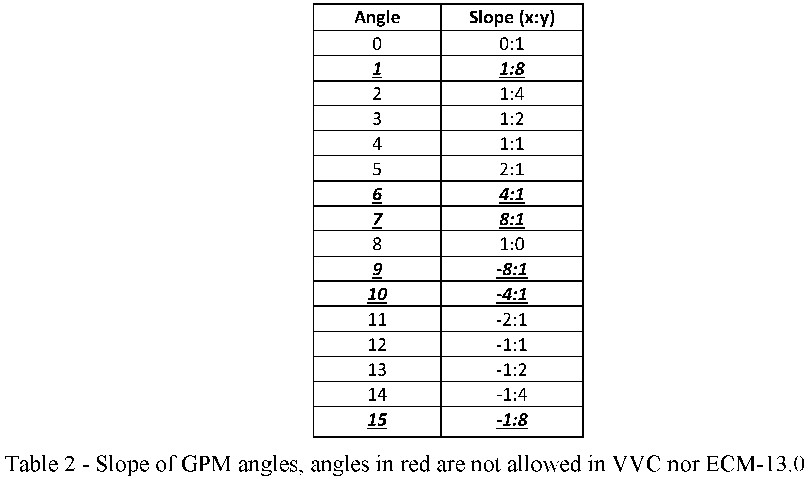

Some angles are not used to keep a limit of 64 partitions. In table 2, the angles 1, 6, 7, 9, 10 and 15 are not used and are represented by a dotted line on FIG. 5. This was a restriction during VVC development. Angles from 16 to 31 have the same slope as their counterparts modulo 16. Therefore, angle 16 is the same split as angle 0, angle 17 the same as angle 1, etc. The difference is that the displacements move the partitions one way for angles 0-15 and the opposite way for angles 16-31. As an example, angle 0 with displacement 1 is a vertical split shifted to the left, to have a smaller left partition than the right partition. Angle 16 displacement 1 is also a vertical split but shifted to the right, with a bigger left partition.

Spatial geometric partitioning mode (SGPM) is an intra mode that resembles the inter coding tool of geometric partitioning mode (GPM). However, with SGPM, the two prediction parts are generated from intra prediction process.

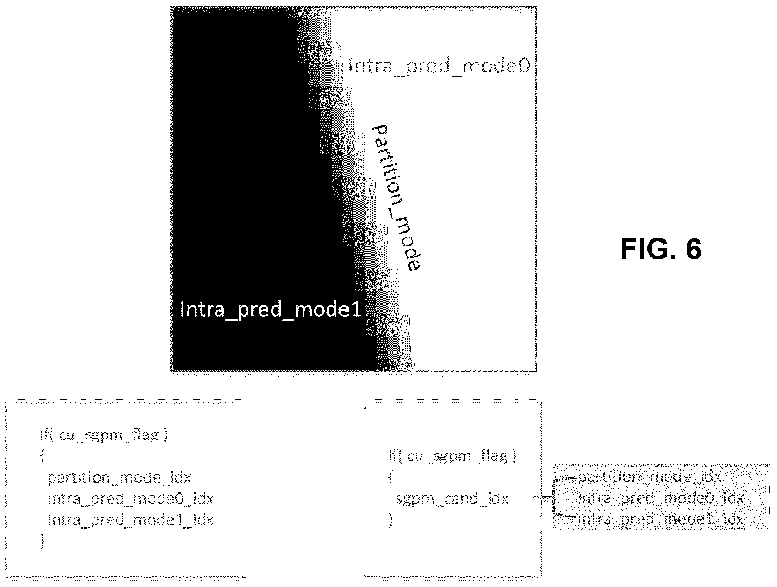

For this mode (e.g., in ECM-10.0), a candidate list may be built with each entry containing one partition split (e.g., identified by an index partition_mode_idx on FIG. 6) and two intra prediction modes (e.g., identified by indices intra_pred _mode0_idx and intra_pred_mode1_idx on FIG. 6). 26 partition modes and 3 of intra prediction modes are used to form the combinations. The combination selected in the candidate list may be indicated by an index sgpm_cand_idx. The length of the candidate list is, for example, set equal to 16. The selected candidate index (e.g., sgpm_cand_idx of FIG. 6) may be signaled.

In the example of Table3, 26 partitions are allowed for SGPM. Table3 is a subset of Table 1.

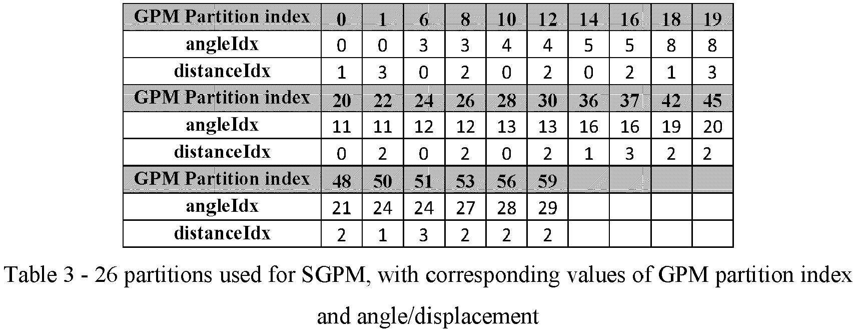

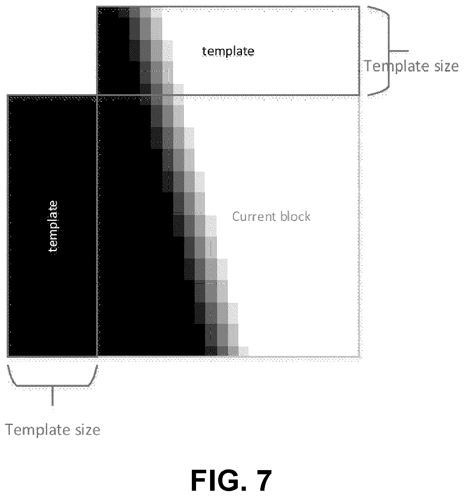

The list may be ordered (e.g., reordered) using a template of the current block that is depicted on **FIG. 7****.** More precisely, the sum of absolute difference (SAD) between the prediction and reconstruction of the template may be used for ordering the combinations in the candidate list. The encoder may select among the combinations of the ordered list (e.g., among the 16 first combinations) the one to be used for encoding the current block and may signal the position of the selected combination in the ordered list by the index sgpm_cand_idx. The decoder may construct the ordered list in the same manner as the encoder, may decode the index sgpm_cand_idx to retrieve the associated combination of intra_pred_mode0_idx/intra_pred_mode1_idx/ partition_mode_idx in order to reconstruct the current block. The template size is for example fixed to 1.

For each partition mode, an intra prediction mode (IPM) list is derived for each part using the same intra-inter GPM list derivation. The IPM list size may be, for example, set to 3. The available IPM candidates may be:
1) two derived modes from TIMD with horizontal and vertical orientations;
2) Parallel mode;
3) one derived mode from DIMD;
4) five candidates derived from the neighboring blocks;
5) and the Planar mode.

As for the neighboring mode derivation, there are five positions for available neighboring blocks at most, but they may be restricted by the angle of SGPM block boundary.

Intra block copy with geometric partitioning mode (IBC-GPM) is a coding tool which divides a CU into two sub-partitions geometrically. The prediction signals of the two sub-partitions are generated using IBC and intra prediction. IBC-GPM can be applied to regular IBC merge mode or IBC TM merge mode. An IPM candidate list is constructed using the same method as GPM-Intra for intra prediction (i.e., regular GPM with intra and inter prediction), and the IPM candidate list size is, for example, set to 3. There are 48 geometric partitioning modes in total, which are divided into two geometric partitioning mode sets as follows:

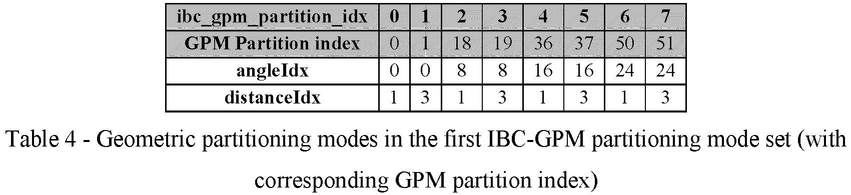

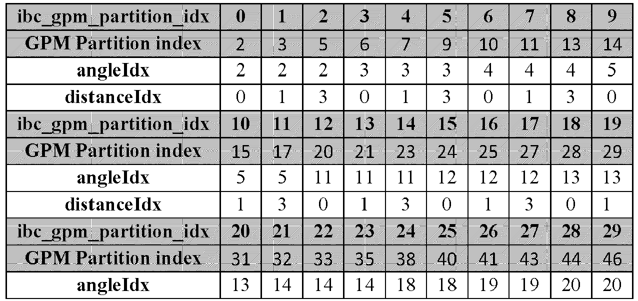

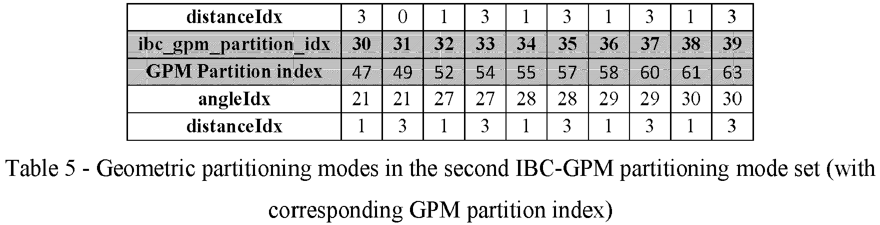

When IBC-GPM is used, an IBC-GPM geometric partitioning mode set flag is signalled to indicate whether the first or the second geometric partitioning mode set is selected, followed by the geometric partitioning mode index. An IBC-GPM intra flag is signalled to indicate whether intra prediction is used for the first sub-partition. When intra prediction is used for a sub-partition, an intra prediction mode index is signalled. When IBC is used for a sub-partition, a merge index is signalled.

In bi-predictive IBC-GPM, two flags are signalled to indicate the prediction modes of two partitions, the first flag indicates whether the first partition is intra predicted, and if not then the second flag is signalled to indicate whether intra prediction is used for the second partition. This method is applied to SCC only.

In the previous examples, the geometric partitioning mode sets used by GPM, IBC-GPM and SGPM differ which is not optimal from the compression efficiency nor the hardware implementation point of view. Indeed, GPM uses Table 1, SGPM uses Table3 and IBC-GPM uses two sets defined by Tables 4 and 5.

In contrast, a method is disclosed wherein geometric partitioning mode (GPM) and related GPM modes (e.g., IBC-GPM and SGPM) are harmonized. In an example, the partitions used for a plurality (e.g., all) GPM variants (e.g., GPM, IBC-GPM and SGPM) are harmonized. In an example, a single table of reordered modes is used for the plurality of GPM variants. Moreover, in another example, the efficiency of these modes is increased by adding new partitions, e.g., the number of partitions is increased by allowing more angles and displacements. Finally, size-dependent partitions (or block shape dependent partitions) are included for GPM and related GPM modes.

Therefore, the compression efficiency is improved, that is, the bitrate is reduced while maintaining the quality, or equivalently the quality is improved while maintaining the bitrate.

The various examples disclosed below may be implemented in the encoder 200 of FIG. 2 or in decoder 300 of FIG. 3. In particular, the various methods and other aspects described in this application can be used to modify modules of the video encoder 200 and decoder 300 as shown in FIG. 2 and FIG. 3.

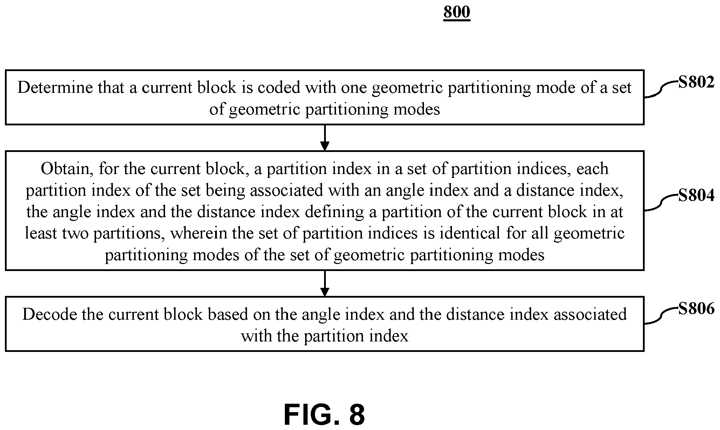

**FIG. 8** depicts a flowchart of a decoding method 800 according to one embodiment.

At S802, it is determined that a block (e.g., an image or a picture block) is coded with one geometric partitioning mode of a set of geometric partitioning modes. In an example, the set of geometric partitioning modes comprises the following modes : GPM, SGPM and IBC-GPM. In an example, a syntax element is decoded from a bitstream that indicates that the block is coded with one particular geometric partitioning mode of the set, e.g. that the block is coded with SGPM mode.

At S804, a partition index is obtained, for the block; in a set of partition indices, each partition index of the set being associated with an angle index and a distance index, the angle index and the distance index defining a partition of the current block in at least two partitions. The set of partition indices may be defined by a table (e.g. a Look Up Table) that maps/associates each partition index with an angle index and a distance index. The set of partition indices is identical for all geometric partitioning modes of the set. Said otherwise a single set of partition indices or Table (e.g., Table 6) is used for all partitioning modes of the geometric set of partitioning modes. The partition index may be decoded from a bitstream.

At S806, the block is decoded based on the angle index and the distance index associated with the partition index. Said otherwise, the angle index and the distance index define how the block is split into two partitions. Each partition is thus decoded.

A corresponding encoding method is disclosed, wherein step S806 is replaced by a step wherein the block is encoded based on the angle index and the distance index associated with the partition index. Information representative of the partition index may be signaled (i.e., encoded). On the encoder side, the angle and distance indices (and thus the partition index) may be obtained (e.g., selected or chosen) by rate distortion optimization.

In order to use a single set of partition indices or a single Table (e.g., one array) for all geometric partitioning modes GPM, SGPM and IBC-GPM, the GPM partitions are reordered as defined in Table 6.

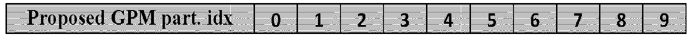

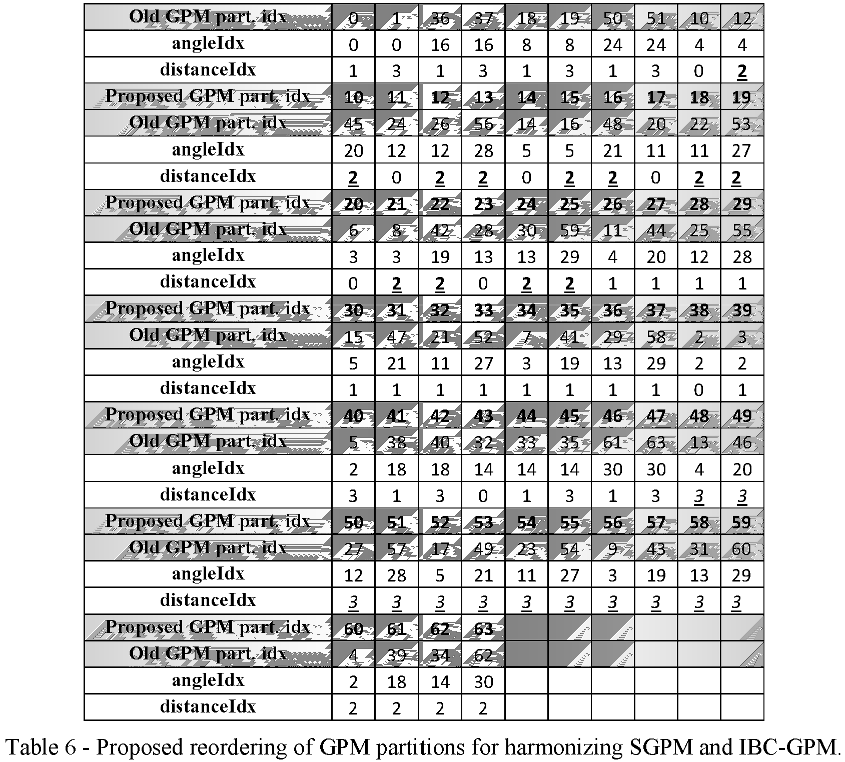

The first 8 partitions correspond to the first IBC-GPM partitioning set (as shown in Table 4). The first 26 partitions correspond to the 26 SGPM partitions shown in Table 3, even if ordered differently. Partitions 8 to 47 correspond to the 40 partitions in the second IBC-GPM partitioning set shown in Table 5, where the displacements have been modified so that IBC-GPM and SGPM use the same partitions.

It should be noted that while the angles selected are the same in SGPM and IBC-GPM, there are differences on the displacements used. While IBC-GPM only uses displacement indices of 0, 1 and 3, SGPM uses displacements indices 0 and 2 for most angles; There is one exception for fully angular and fully vertical angles, where SGPM uses the same indices as IBC-GPM. Therefore, this change harmonizes the modes used by IBC-GPM and SGPM. In the example shown in Table 6, SGPM modes are 'favored' (e.g., they are favored from a compression efficiency point of view), that is, the partitions shared by SGPM and IBC-GPM are the SGPM ones, with displacement 2. There are indicated in bold and underlined. This ordered set (represented by Table 6) is referred to as set1. In some examples, those partitions (for which the distance index is in bold and underlined in Table 6) are swapped with the ones for which the distance index is indicated in italics and underlined in Table 6, so that IBC-GPM partitions are 'favored'. The ordered set wherein the partitions (for which the distance index is in bold and underlined) are swapped with the partitions for which the distance index is in bold and underlined is referred to as set2.

In the example of Table 6, it can also be seen that IBC-GPM is allowed to use displacements of either 0, 1 or 2, for most angles, but not for angles 2, 18, 14 and 30 (with proposed partition index 40, 42, 45 and 47). The original IBC-GPM angles are chosen here as those are not shared with SGPM. In some variants, those 4 partitions are swapped with the last 4 partitions, so that IBC-GPM always uses displacements 0, 1 or 2.

In some variants, different orders are signaled through additional or existing SPS flags. For example, the flag may be equal to 0 to indicate that set1 is used to encode all partitions whatever the GPM is and the flag may be equal to 1 to indicate that set2 is used to encode all partitions whatever the GPM is. In an example, only the first 26 partitions of set1 or set2 are used for SGPM and the first 48 partitions of the set1 or set2 are used in case of IBC-GPM while the whole set1 or the whole set2 is used in case of classical GPM. For example, the order can `favor' SGPM modes when IBC-GPM is not used (e.g., in camera captured content) and the order can `favor' IBC-GPM when IBC-GPM is used (e.g., for computer generated content).

In an example, the signaling remains unchanged for SGPM, GPM, and IBC-GPM, and the `proposed GPM partition idx' (proposed GPM part. idx in Table 6) is signaled in the same way as `GPM Partition index' is in ECM-13.0.

In some examples, the number of partitions for regular GPM may be reduced to 48 (i.e. `proposed partition idx' 0 to 47) to be the same as IBC-GPM. Similarly, the number of partitions for SGPM can be increased to 48 to also be harmonized with IBC-GPM.

In another embodiment, the number of partitions used in GPM is increased by allowing more angles, and more displacements, e.g., in cases where some displacements are disallowed. In some examples, the number of partitions allowed in GPM is increased from 64 to 80, by allowing the angles 6, 10, 22 and 26 (see FIG. 5) with all their displacements (for a total of 14 added partitions). To keep the total number of partitions divisible by 8, 2 extra partitions may be added, e.g., the vertical splits with displacement 2 (i.e., angle 0, displacement 2 and angle 16, displacement 2).

In an example, 96 partitions are allowed, by also including angles 1, 15, 17 and 31 with all their displacements, as well as the horizontal splits with displacement 2 (angles 8 and 24, displacement 2).

In an example, all angles and all displacements are allowed for a total of 112 partitions (i.e. adding partitions 7, 9, 23 and 25 with all displacements, as well as angle 0 displacement 0 and angle 8 displacement 0, on top of the 96 proposed partitions), as shown in Table 7.

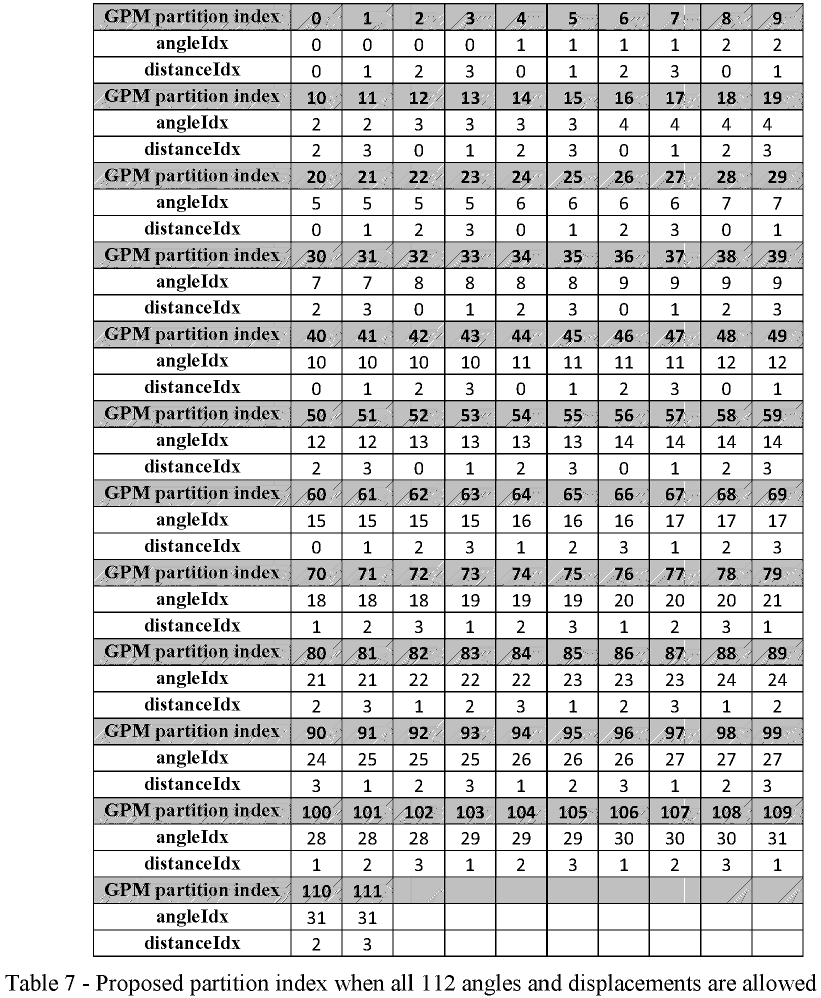

In another embodiment, the partitions used by GPM and related modes depend on the block size, e.g., to favor partitions more likely to be used on a given block size. One example of such size-dependent partitions is shown in Table 8. As the most selected angles for a given block-size are the diagonals and inverse diagonals, the proposed selection focuses on having diagonals and their neighbors (e.g., a neighbor is an angle that is close to the angle defined by the diagonal) always present in the list of available partitions in the example. The neighbors of the diagonal are angles defined, for example, by an angle index equal to the diagonal index plus or minus one. Moreover, fully vertical and horizontal angles have a high selection rate amongst all block sizes, that is why, in a specific example, they are also always included in the set.

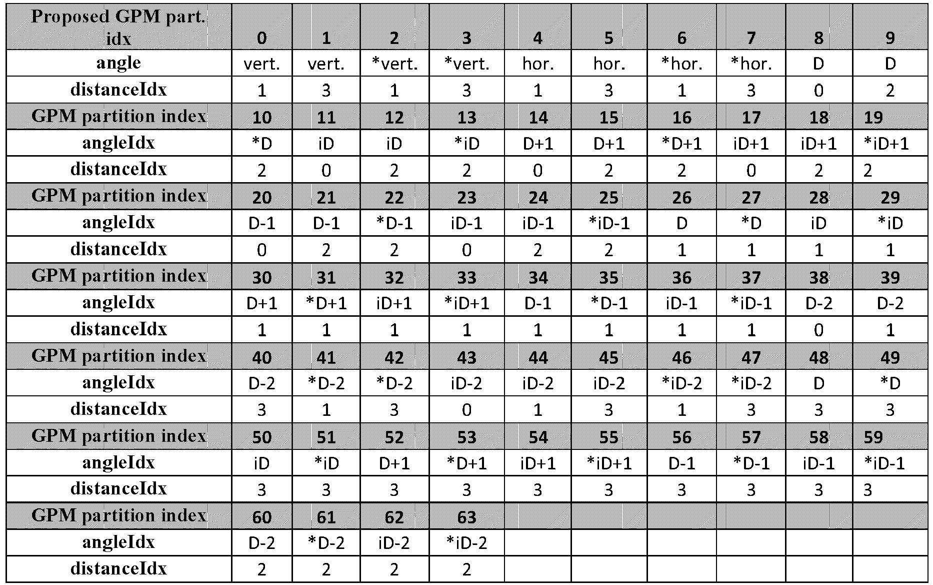

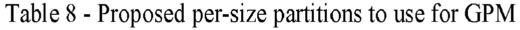

In Table 8, "vert." and "hor." correspond to fully horizontal and fully vertical angles (angles 0 and 8 in Table 1). "*angle" corresponds to "angle+16", i.e., the same direction as "angle" but with opposite displacements. "D" corresponds to the angle equal to the diagonal of the block, from top left to bottom right. For a square block, D=4 (i.e., for a square block, the diagonal D correspond to an angle index 4 on FIG. 5 which is an angle of 45° with respect to the horizontal) and, for a block with width=2 x height, D=5 (i.e., for a block with the width equal twice the height, the diagonal D correspond to an angle index 5 on FIG. 5). "iD" is the inverse diagonal, from top right to bottom left, i.e. iD=16-D. "iD+1" is read as i(D+1) and therefore it is equal to 16-(D+1). Similarly, *iD+1 is read as *(iD+1). For a square block, with D=4, the angle values of this table are the ones in Table 6.

For block sizes where the angle value does not exist, or is already included, the closest angle value that is not already included in the partition list is added. Indeed, for some blocks (e.g., a 4x64 block), the diagonal would have a slope of 1:16 that does not correspond to an allowed angle. Therefore, in this case, the closest angle (e.g., the one corresponding to a slope 1:8) is used. For example, for a block of size 8x32, the corresponding diagonal is D=2, i.e., its diagonal has the same slope as the GPM angle indexed by 2 on FIG. 5.

In the variants where this embodiment is combined with the increased number of partitions and uses all the available 112 partitions, the angle D-1=1 is available. However, the angle D-2=0 is redundant as it corresponds to the already included vertical angle. Therefore, the angle D+2=4 may be added instead of D-2=0.

When combining this embodiment with the increased number of partitions, it is possible to keep using only 64 partition indices for each type of block shape while allowing all the angles and displacements. Said otherwise, for each column in Table 9, only 64 partition indices may be used instead of 80. This provides a wider range of available angles while not increasing the signaling cost.

When combining this embodiment with the increased number of partitions, going from 64 to 80 partitions indices can be done by adding D+2 with displacements 0, 1, 2, 3, *D+2 with displacements 1, 2, 3, the same displacements for iD+2 and *iD+2, and either vert. or hor. with displacement 2. The choice of adding the vertical or horizontal angle can be done in a fixed manner (e.g. always add vert. with displacement 2) or can also be done based on block shape (e.g. add vert. if width is under or equal to height and add hor. otherwise).

The example in Table 8 'favors' SGPM as the example in Table 6. The same changes as described in the `reordering' section can be made to 'favor' IBC-GPM instead.

In another example, a different number of modes is used for GPM depending on the block size. For example, smaller blocks (e.g. with width times height under 64) use a reduced number of partition indices (e.g., only the first 48 indices) while bigger blocks (e.g. width times height greater than 1024) use more partition indices (e.g. extend to 80 partitions indices).

To simplify the mapping between partition indices and angles/displacement when using per-size partitions, a look up table can be used to map the signaled partition index to a general table that includes all allowed partitions (such a general table is, e.g., Table 7). Table 9 provides an example of mapping between the signaled partition index and the 112 allowed partitions with 7 different block shapes. This table is an example combining the three embodiments of this disclosure (i.e., use of a single of partition modes for all GPM modes, the increased number of partitions, and the size-dependent partition)

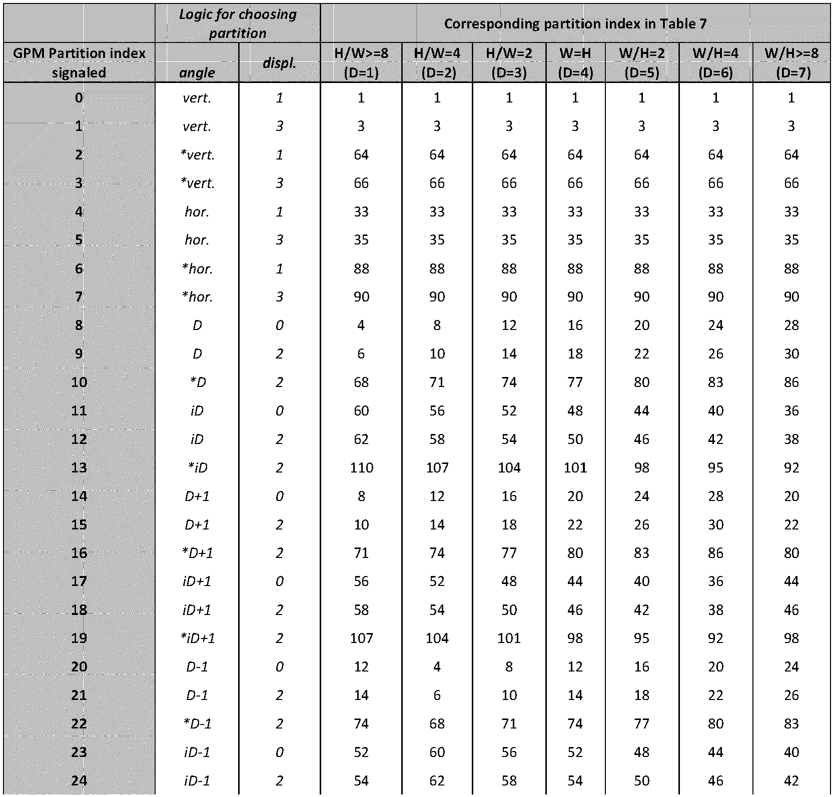

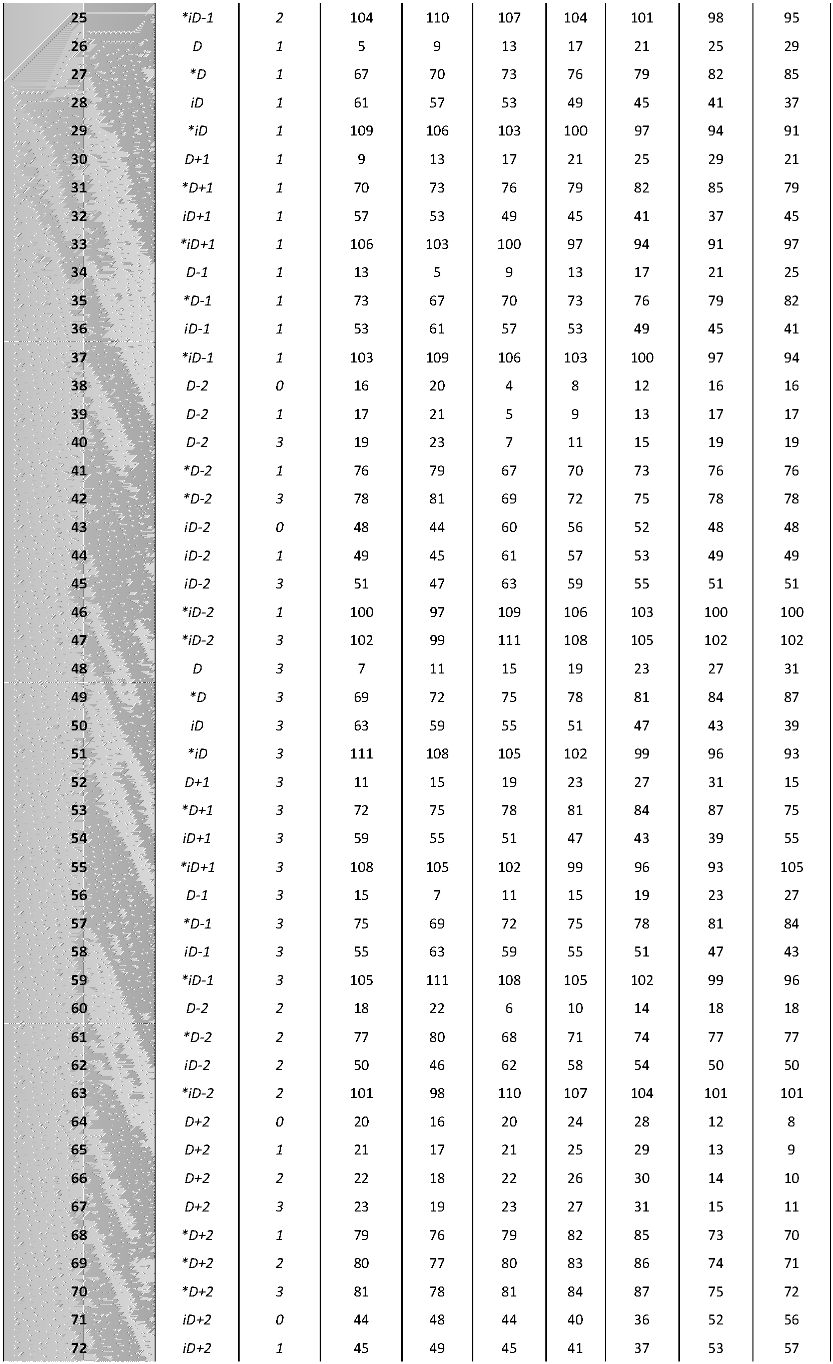

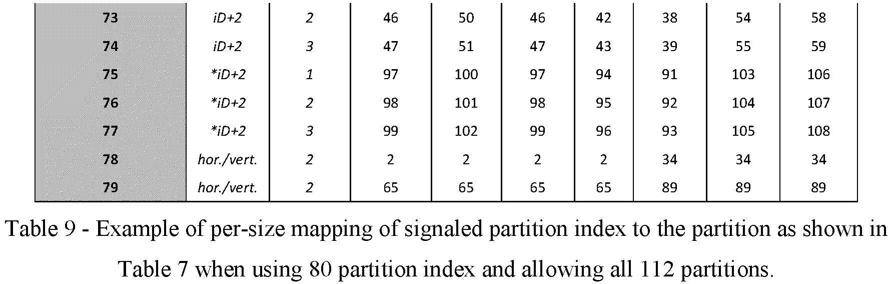

In some variants, the first 8 modes (which are, as per the 'reordering', used for the first set of IBC-GPM) can be modified to include the diagonal and inverse diagonal with displacement 0, instead of, for example, the two fully horizontal partitions with displacement 3. In some examples, the diagonal and inverse diagonal partitions may replace or may be swapped with either vertical angles or horizontal angles based on block shape. Said otherwise, in an example, the diagonal and inverse diagonal partitions may be swapped with either vertical angles or horizontal angles for some block shapes only.

Moreover, the present aspects are not limited to ECM, VVC or HEVC, and can be applied, for example, to other standards and recommendations, and extensions of any such standards and recommendations. Unless indicated otherwise, or technically precluded, the aspects described in this application can be used individually or in combination.

Various numeric values are used in the present application. The specific values are for example purposes and the aspects described are not limited to these specific values.

Note that syntax elements as used herein, such as terms in equations and algorithms, signal (e.g., flag, mode) labels/names, etc., such as partition_mode_idx, intra_pred_mode0 or intra_pred_mode 1 and so on, are descriptive terms. As such, they do not preclude the use of other syntax element names.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, decode a block coded with a geometric partitioning mode selected in a set of GPM modes (e.g., GPM, IBC GPM or SGPM) based on an angle index and a distance index associated with a partition index obtained (e.g., selected) in a set of partition indices that is identical for all geometric partitioning modes of the set of geometric partitioning modes.

As further examples, in one embodiment "decoding" refers only to entropy decoding, in another embodiment "decoding" refers only to differential decoding, and in another embodiment "decoding" refers to a combination of entropy decoding and differential decoding, and in another embodiment "decoding" refers to the whole reconstructing picture process including entropy decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, encode a block coded with a geometric partitioning mode selected in a set of GPM modes (e.g., GPM, IBC GPM or SGPM) based on an angle index and a distance index associated with a partition index obtained (e.g., selected) in a set of partition indices that is identical for all geometric partitioning modes of the set of geometric partitioning modes.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

This disclosure has described various pieces of information, such as for example syntax, that can be transmitted or stored, for example. This information can be packaged or arranged in a variety of manners, including for example manners common in video standards such as putting the information into an SPS, a PPS, a NAL unit, a header (for example, a NAL unit header, or a slice header), or an SEI message. Other manners are also available, including for example manners common for system level or application level standards such as putting the information into one or more of the following:
a. SDP (session description protocol), a format for describing multimedia communication sessions for the purposes of session announcement and session invitation, for example as described in RFCs and used in conjunction with RTP (Real-time Transport Protocol) transmission.
b. DASH MPD (Media Presentation Description) Descriptors, for example as used in DASH and transmitted over HTTP, a Descriptor is associated with a Representation or collection of Representations to provide additional characteristic to the content Representation.
c. RTP header extensions, for example as used during RTP streaming.
d. ISO Base Media File Format, for example as used in OMAF and using boxes which are object-oriented building blocks defined by a unique type identifier and length also known as 'atoms' in some specifications.
e. HLS (HTTP live Streaming) manifest transmitted over HTTP. A manifest can be associated, for example, to a version or collection of versions of a content to provide characteristics of the version or collection of versions.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Some embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed. Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items.

Also, as used herein, the word "signal" refers to, among other things, indicating something to a corresponding decoder. For example, in certain embodiments the encoder signals a particular one of a plurality partitioning indices. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Many examples are described herein. Features of examples may be provided alone or in any combination, across various claim categories and types. Further, examples may include one or more of the features, devices, or aspects described herein, alone or in any combination, across various claim categories and types. For example, features described herein may be implemented in a bitstream or signal that includes information generated as described herein. The information may allow a decoder to decode a bitstream, the encoder, bitstream, and/or decoder according to any of the embodiments described. For example, features described herein may be implemented by creating and/or transmitting and/or receiving and/or decoding a bitstream or signal. For example, features described herein may be implemented a method, process, apparatus, medium storing instructions, medium storing data, or signal. For example, features described herein may be implemented by a TV, set-top box, cell phone, tablet, or other electronic device that performs decoding. The TV, set-top box, cell phone, tablet, or other electronic device may display (e.g. using a monitor, screen, or other type of display) a resulting image (e.g., an image from residual reconstruction of the video bitstream). The TV, set-top box, cell phone, tablet, or other electronic device may receive a signal including an encoded image and perform decoding.

A number of embodiments has been described above. Features of these embodiments can be provided alone or in any combination, across various claim categories and types.

## Claims

1. A decoding method comprising:
determining that a current block is coded with one geometric partitioning mode of a set of geometric partitioning modes;
obtaining, for the current block, a partition index in a set of partition indices, each partition index of the set being associated with an angle index and a distance index, the angle index and the distance index defining a partition of the current block in at least two partitions ;
decoding the current block based on the angle index and the distance index associated with the partition index; and
wherein the set of partition indices is identical for all geometric partitioning modes of the set of geometric partitioning modes.

2. The method of claim 1, wherein first eight partitions of the set of partition indices correspond to a first partitioning set for intra block copy geometric partitioning mode, IBC-GPM, next forty partitions correspond to a second partitioning set for IBC-GPM and first twenty-six partitions further correspond to partitions for spatial geometric partitioning mode, SGPM.

3. The method of claim 1 or 2, comprising decoding a sequence parameter set flag to indicate whether the set of partition indices favors SGPM or IBC-GPM.

4. The method of any one of claims 1 to 3, wherein the set of partition indices comprises 112 partition indices, each partition index of the set being associated with an angle index between 0 and 31 and a distance index between 0 and 3.

5. The method of any one of claims 1 to 4, wherein the set of partition indices depends on a size of the current block.

6. The method any one of claims 1 to 5, wherein the set of partition indices always comprises angles neighboring the angle defined by a diagonal of the current block.

7. An encoding method comprising:
determining that a current block is coded with one geometric partitioning mode of a set of geometric partitioning modes;
obtaining, for the current block, a partition index in a set of partition indices, each partition index of the set being associated with an angle index and a distance index, the angle index and the distance index defining a partition of the current block in at least two partitions ;
encoding the current block based on the angle index and the distance index associated with the partition index; and
wherein the set of partition indices is identical for all geometric partitioning modes of the set of geometric partitioning modes.

8. The method of claim 7, wherein first eight partitions of the set of partition indices correspond to a first partitioning set for intra block copy geometric partitioning mode, IBC-GPM, next forty partitions correspond to a second partitioning set for IBC-GPM and first twenty-six partitions further correspond to partitions for spatial geometric partitioning mode, SGPM.

9. The method of claim 7 or 8, comprising encoding a sequence parameter set, SPS, flag to indicate whether the set of partition indices is a set that favors SGPM or IBC-GPM.

10. The method of any one of claims 7 to 9, wherein the set of partition indices comprises 112 partition indices, each partition index of the set being associated with an angle index between 0 and 31 and a distance index between 0 and 3.

11. The method of any one of claims 7 to 10, wherein the set of partition indices depends on a size of the current block.

12. The method of any one of claims 7 to 11, wherein the set of partition indices always comprises angles neighboring the angle defined by a diagonal of the current block.

13. A decoding apparatus comprising one or more processors and at least one memory coupled to said one or more processors, wherein said one or more processors are configured to perform the method of any one of claims 1-6.

14. An encoding apparatus comprising one or more processors and at least one memory coupled to said one or more processors, wherein said one or more processors are configured to perform the method of any one of claims 7-12.

15. A computer readable storage medium having stored thereon instructions for implementing the method of any one of claims 1-12.
